# EUROPEAN PATENT SPECIFICATION

(11) **EP 3 619 698 B1**
(45) Date of publication and mention of the grant of the patent: **28.10.2026**
(21) Application number: 18723606.2
(22) Date of filing: 30.04.2018
(51) Int. Cl.: G08G 5/22, G01S 13/78, G01S 13/933, G08G 5/26, G08G 5/55, G08G 5/56, G08G 5/72, G08G 5/80, G08G 7/02, G08G 5/57, G08G 5/76

(54) **A PORTABLE AIR-TRAFFIC CONTROL SYSTEM FOR DRONES**
TRAGBARES LUFTVERKEHRSKONTROLLSYSTEM FÜR DROHNEN
SYSTÈME PORTATIF DE CONTRÔLE DE TRAFIC AÉRIEN POUR DRONES

(30) Priority: 05.05.2017 WO PCT/IB2017/052638
(43) Date of publication of application: 11.03.2020
(73) Proprietor: Involi SA, 1020 Renens (CH)
(72) Inventor: LUBRANO, Emanuele, 1041 Poliez-le-Grand (CH); GUITTET, Mélanie, 1022 Chavannes-près-Renens (CH); MIHALACHIOIU, Cristina, 1041 Poliez-le-Grand (CH)
(74) Representative: P&TS SA (AG, Ltd.)
(86) International application number: PCT/IB2018/052984
(87) International publication number: WO 2018/203214

(56) References cited:
- EP-A1- 2 506 032
- US-A1- 2008 191 942
- US-A1- 2014 028 485
- US-A1- 2015 170 524
- US-B1- 9 310 477

## Description

### Reference data

This application claims priority of International Patent Application PCT/IB2017/052638 filed on May 5, 2017.

### Technical field

The invention disclosed herein relates to UAVs (Unmanned Aerial Vehicles), general aviation aircraft and commercial aircraft. The invention acts as a scaled down aviation air-traffic control system, which provides to the drone pilot or autopilot local information to avoid collisions with air vehicles, especially in the area where the drone is flying and at low altitudes.

### Background

The present invention relates to radar systems, specifically to ones used to detect, track and monitor air vehicles having cooperative detection systems installed, such as automatic dependent surveillance-broadcast (ADS-B) or transponder.

A drone or unmanned aerial vehicle (UAV) is an air vehicle without a pilot on board. Nowadays, drones come in any size (starting with a few grams weight up to several hundreds of kilos) and their application keep multiplying.

As the drone number increases, the danger of them colliding with manned air traffic grows. In order to avoid accidents, more and more collision avoidance solutions have been proposed in prior art. Those solutions can be categorized as follows:
radars to detect UAVs;
sensors installed on UAVs, to detect other air-traffic;
sensors installed on air-traffic, to detect UAVs.

Accordingly, to avoid a collision, the position of an UAV which is too close to a manned air vehicle is communicated to the ATC (air traffic control) or directly to the pilot in various ways. After that, it is to the pilot to take measures to avoid the collision. Drone number is predicted to considerably grow in the following year. This approach would result in a surcharge of work for the ATC and for the pilot in order to handle the interactions with more and more UAVs.

On the other side, sensors installed on UAVs are very limited in range because of low power allocated to the emitter (this is true especially for drones under 10 kg), resulting in a non-prompt communication with a potentially colliding aircraft. Furthermore, such kind of device drains the autonomy of the drone itself, lowering its flight autonomy.

All of the above technical problems suggest that collision avoidance between UAVs and manned air vehicles should be handled in a way where the traffic information is given directly to the drone (and therefore using its intelligence for the collision avoidance) instead of the manned vehicle, while not adding another technical device to the drone itself.

Document US9310477 discloses a system for monitoring airborne objects comprising an air traffic management system that includes a memory device for storing data and a processor coupled to the memory device. The processor is programmed to receive object data associated with each of a plurality of airborne objects transmitted by at least one remote sensor device and generate an air traffic map to display a present location and a flight path for each airborne object based on the received object data.

Document EP2506032 discloses a method for validating received positional data in vehicle surveillance applications wherein vehicles transmit positional data indicating their own position to surrounding vehicles, such as an ADS-B-based aircraft surveillance application.

Document US2014028485 discloses a method that allows an unmanned aircraft (UA) to act as a cooperative aircraft when airborne in an airspace includes obtaining positional data for the UA from a Ground Control Station (GCS), reformatting the positional data from the GCS to a format compatible with an Automatic Dependent Surveillance-Broadcast (ADS-B) transceiver, sending the reformatted positional data to the ADS-B transceiver, and configuring the ADS-B transceiver to broadcast a position of the UA into the airspace from the ground while the UA is airborne.

### Summary

The system described herein addresses the collision avoidance issue between UAVs and manned air traffic, by providing to the drone pilot or autopilot the air traffic status around the drone. In this way, the drone (and not the manned aircraft) can act automatically and avoid the traffic before the collision. The first advantage of this approach is that the full potential of the drone autopilot is used, as the system does not rely on conventional ATC or on the manned pilot, consequently not surcharging those groups of professionals.

In order to obtain a good air situation awareness around the area where the drone is flying, without adding hardware on the drone, a hardware to detect the traffic is installed on the ground, close to the drone operator. The hardware consists of a portable control tower capable of detecting air traffic equipped with ADS-B (a new standard to communicate air traffic position) and/or a transponder (an older standard for the same purposes). Detecting air-traffic equipped exclusively with a transponder is a real advantage because this kind of traffic flies in the same areas used by drones, at the same low altitudes.

The positions read with the portable control tower are transformed in GPS coordinates, then the direction, speed and altitude of the air vehicles are computed by a software acting as an automatic air-traffic controller. All such information is provided either to the drone pilot (which will act manually to avoid the collision) or to the drone autopilot (which will be able to avoid the collision automatically).

The present disclosure concerns a portable air-traffic control system as described in claim 1.

The present disclosure further concerns a method for generating a fencing information signal using the control as described in claim 12 and a non-transitory computer medium comprising portions of code for a software application destined to be executed in an external processing unit in order to perform the method, as described in claim 14.

In an example not covered by the scope of the claims, the system portability is limited and the battery is replaced by a fixed connection to the power network, called fixed mini control tower.

The multiple fixed mini control towers are inter-connected to the same air-traffic controller, to extend the coverage range of the whole system.

The present disclosure also concerns a procedure to transform the reading of a miniaturized aviation SSR to GPS coordinates.

### Brief Description of the Drawings

The invention will be better understood with the aid of the description of an embodiment given by way of example and illustrated by the figures, in which:
Fig. 1 shows a portable air-traffic control system comprising a control tower, according to an example not covered by the scope of the claims;
Fig. 2 shows an exploded view of the portable control tower;
Fig. 3 is a scheme showing how the position of the air vehicles is received, computed and communicated to the drone;
Fig. 4 is a scheme showing the data processing performed to extrapolate the position of the air vehicles;
Fig. 5 is a scheme needed to understand how the conversion from transponder reading to GPS coordinates is performed; and
Fig. 6 shows the air-traffic control system comprising a plurality of the control tower, according to an embodiment.

### Detailed Description of possible embodiments

Herein below, there is a description of the various components and mechanisms embodied by the invention, with reference to the related drawings, depicting specific combinations resulting in the invention's use. This does not exclude the fact that other embodiments may be used and/or that modifications to the structure can be made without limiting the scope herein.

A portable air-traffic control system to detect aircraft as to enable UAVs to avoid collision with said detected aircraft is presented here. The problems addressed are the following: 1) lack of efficient and complete means for giving manned air traffic information to an UAV pilot or autopilot, 2) weight and consumption of sensors to embark on drone system to detect such traffic.

It is described herein a miniaturization of aviation technologies represented by a system with low radiated power, enabling compliance with urban safety regulations. At the same time, the system ensures fast and easy installation.

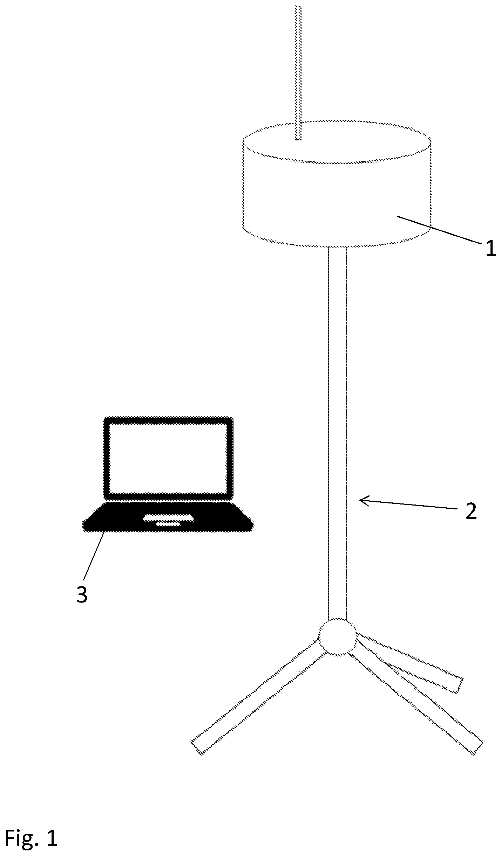

Reference is now made to Fig. 1, that schematically illustrates the complete system. The system can be composed of two parts, (i) a portable control tower 1 and (ii) a software on a computing device 3, that combined will act as an automatic air traffic controller. The portable control tower 1 can be mounted on a tripod 2 in order to gain height. The control tower 1 in this configuration provides an azimuthal coverage from 0° to 360°, within a predefined range of elevations below and above the horizon.

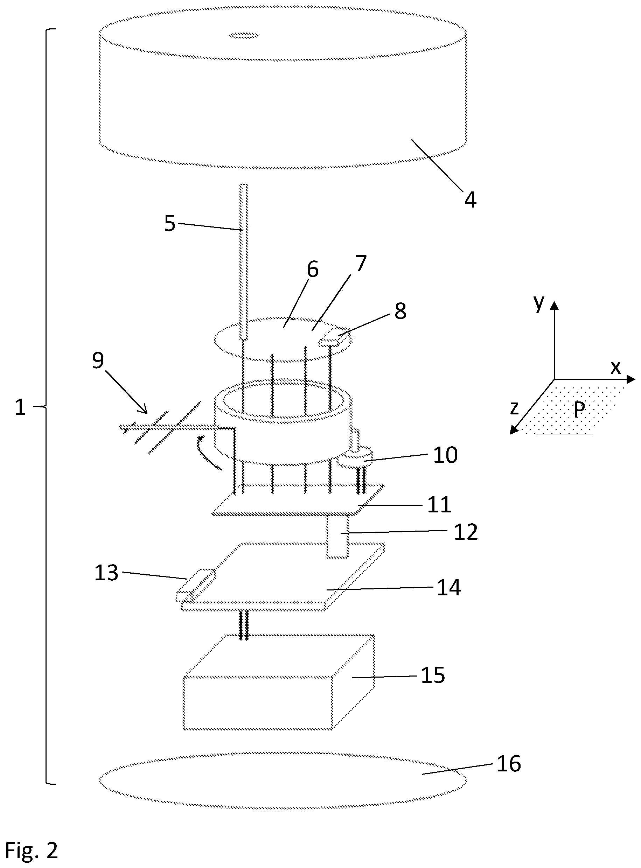

Reference is now made to Fig. 2, which shows an exploded view of the control tower 1 and shows parts composing the portable control tower 1. The system is mounted over a robust bottom cover 16, which gives support to all mechanical and electronic parts of the portable control power 1. Moreover, the bottom cover 16 contains the mechanical interface to mount the portable control tower 1 on the tripod 2. On top of the system, a plastic top cover 4 protects all the components from rain and other environmental threats. Just under the top cover 4, it is possible to find the following components: a first antenna 5 (preferably a 1090 MHz antenna 5) for receiving an ADS-B signal and/or a transponder signal, a GPS antenna 6, a pressure sensor 7, and a magnetometer 8.

Under this first layer of components, there is a second antenna 9 (preferably a 1030 MHz antenna). The second antenna 9 can be omnidirectional or directional. In the case the second antenna 9 is directional, it can be configurated to rotate around the vertical axis (along the y axis in Fig. 2), parallel to the horizontal plan (P, perpendicular to the y axis). A motor 10 (such as a stepper motor) allows the second antenna 9 to have a precise rotation.

All the antennas 5, 9, sensors 7, 8 and devices 6 introduced until now are connected to a PCB (printed circuit board) 11, which contains all the filters and amplifiers for the correct functioning of the described subsystems. This PCB 11 acts as an interface between the sensors/antennas and a computer motherboard (i.e., a processing unit) 14, which is just below. The connection between the PCB 11 and the processing unit 14 is ensured by a flex cable 12. A Wi-Fi USB key (i.e., a connecting module that can also include any type of wired or wireless network connection, such as ethernet, 4G, Bluetooth, etc.) 13 is plugged in the (for example via a USB port of the) processing unit 14, in order to provide connectivity to the whole system. Finally, a battery 15 provides power to all the system (or to the control tower 1). Alternatively, the control tower 1 can be connected to any source of electricity.

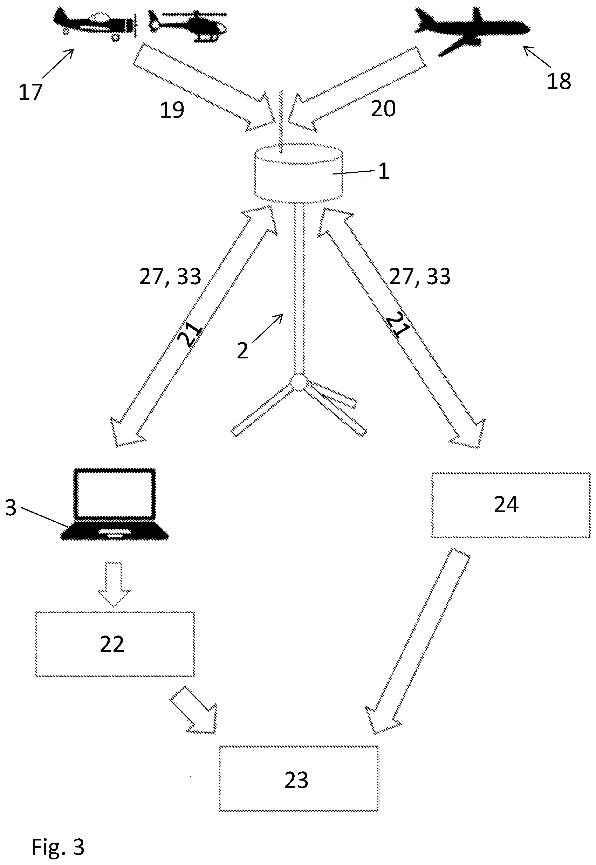

Reference is now made to Fig. 3, which shows how air-traffic positions are communicated to a drone 23 (or any unmanned aerial vehicle, often called "drone" or "UAV" in the present text). Both transponder air vehicles 17 equipped exclusively with transponder, and ADS-B air vehicles 18 equipped with ADS-B 28 emit a signal, respectively shown by numerals 19 (transponder signal) and 20 (ADS-B signal) in Fig. 3, which is read and decoded by the portable control tower 1. The explanations on the protocol of those signals are not provided here as it is a state-of-the-art information. For clarity reasons, the frequency carrying this signal is specified and is 1090 MHz.

The air-traffic information, i.e., an air traffic information signal 27 and/or a fencing information signal 33 (see below), is elaborated and is used to avoid the drone 23 colliding against the detected air traffic (detected air vehicles 17, 18). This is carried out in two ways, depending on how the drone 23 is controlled. In the case where the drone is remotely piloted by a drone pilot having a UAV remote control 22, a computing device (for example a computer or a tablet) 3 is used to display the air-traffic information surrounding the drone 23. The information 27, 33 is sent to the computing device 3 via a communication link 21 (such as a WIFI link). The UAV pilot will see an intuitive 2D and/or 3D map (not shown) that will allow him to easily direct the drone 23 away from traffic. In the case where a drone (or UAV) control system 24 is used in an autonomous way to pilot the drone 23, the control tower 1 will send the traffic information 27, 33 to the drone control system 24 via the same communication link 21. The drone control system 24, having the traffic information available, will use collision avoidance algorithms to avoid the danger. The two way of using the system, i.e., whether the drone 23 is piloted by a pilot using the UAV remote control 22 or autonomous using the drone control system 24, could eventually be used at the same time, depending on the capabilities of the drone control system 24. For example, the pilot using the UAV remote control 22 will fly the drone 23, then in the case of imminent collision the drone control system 24 will "take the control" and avoid the collision.

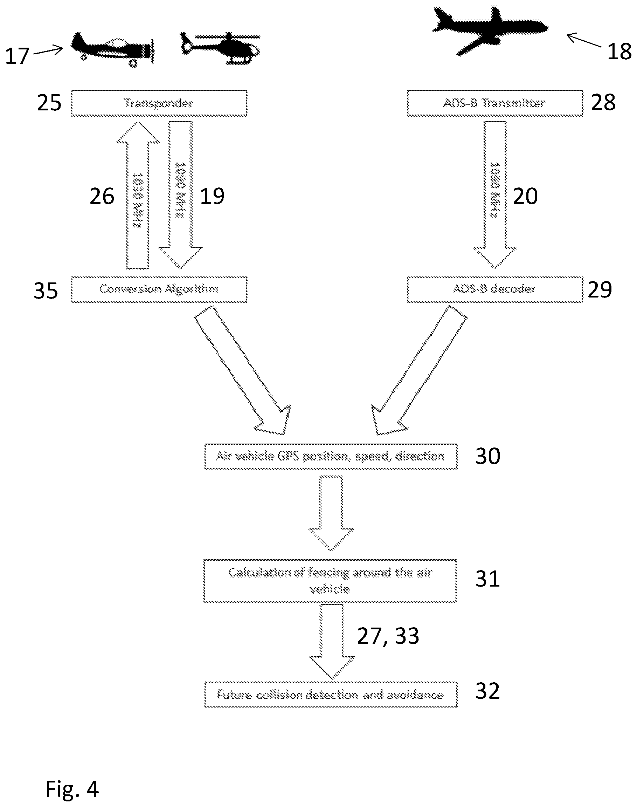

Reference is now made to Fig. 4, which explains the operations done to extrapolate the position reading of the air traffic.

The transponder air vehicles 17 equipped exclusively with a transponder 25 will broadcast their signal (transponder signal 19) exclusively when they receive a particular message (directional message 26) on the frequency 1030 MHz. This directional message 26 is issued by the second antenna 9. Since this antenna 9 can be directional, the transponder 25 on the aircraft 17 will receive the directional message 26 only if the second antenna 9 is exactly oriented towards its direction (i.e., oriented towards the direction of the air vehicle 17 equipped exclusively with a transponder 25). This allows the control tower 1 to know the relative angle between the North of the control tower 1 and the air vehicle 17. The time between the sent directional message 26 and the received message (transponder signal 19) allows calculation of the distance between the second antenna 9 and the aircraft 17. Finally, the aircraft 17 sends in an encoded way its altitude. Thanks to an algorithm that will be explained later, those readings are converted to GPS coordinates by using a conversion code 35.

The ADS-B air vehicles 18 will send their GPS position in an encoded way. A block of software (ADS-B decoder code 29) inside the portable control tower 1 will simply decode the position (of the air vehicles 18) using state-of-the-art algorithms.

At this point, all air traffic positions (i.e., positions of the detected transponder air vehicles 17 and ADS-B air vehicles 18) are described via the GPS standard. Another block of software (traffic information code 30) will simply use multiple position reading of the same aircraft 17, 18 to add speed and direction to the already known information.

All those data are used by a final block of code (fencing calculation code 31) that will calculate a fencing area (not shown) around the aircraft 17, 18 and provide a corresponding fencing signal 33. This fencing is dependent on the speed and the direction of the aircraft. There are different algorithms to calculate this fencing, one is explained here just as an example: a circle representing the fencing is drawn around the air vehicle. The range of the circle corresponds to the distance covered by the air vehicle in 45 seconds. Consequently, to a faster aircraft will correspond a circle with a bigger range.

The air-traffic information, i.e., an air traffic information signal 27) and/or the information regarding the fencing (fencing information signal 33), is finally sent to the drone control system 24 or drone autopilot (UAV remote control 22), where a piece of code (collision assessment code 32) will take such information (air traffic information signal 27 and/or fencing information signal 33) into account, compare it with the current position, speed and direction of the UAV 23 and decide if there is a danger of collision, and, if the case, will take measures to avoid any accident.

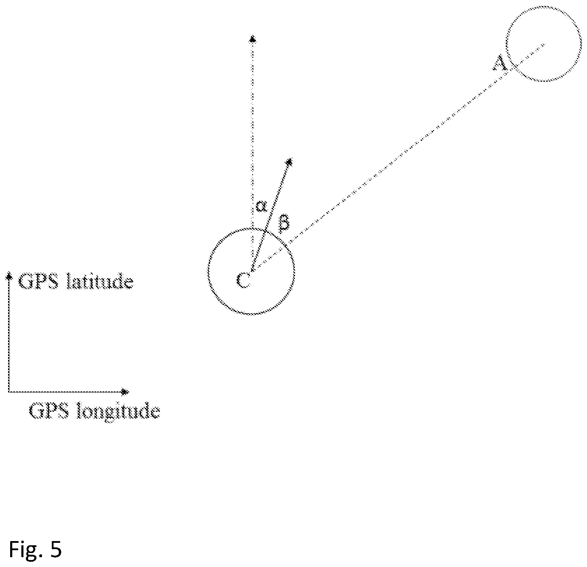

Reference is now made to Fig. 5, where the algorithm to find the GPS position of the transponder aircraft 17 is explained.

The point C represents the GPS position of the control tower 1 (as a reminder, the control tower 1 is equipped with the GPS antenna 6, while the angle α is the difference between the North of the control tower 1 and the magnetic North, measured by using the magnetometer 8. The GPS position gives the altitude of the control tower 1, but a second altitude reading is also obtained by the pressure sensor 7. All these parameters (i.e., angle α, GPS position and altitude reading) define exactly the position, altitude and orientation of the portable control tower 1.

As mentioned before, the transponder aircraft 17 will send its transponder message 19 exclusively when the second antenna 9 is pointed towards its direction (the direction of the transponder aircraft 17). This will happen when the second antenna 9 draws the angle β respect to the North of the control tower 1. The angle toward the magnetic North is, therefore, α + β. The altitude of the transponder aircraft 17 is sent encoded in the message end easily decodable. This altitude is expressed in respect to standard pressure, so, using the pressure reading of the control tower 1, it will be used to calculate the GPS altitude of the transponder aircraft 17.

The distance AC between the transponder aircraft 17 and the control tower 1 is easily calculated by using state-of-the-art techniques related to the SSR radar.

Finally, knowing the angle α + β, the distance AC, the GPS position of C, and the GPS altitude of A, it is a trivial trigonometric problem to calculate the GPS position of A.

It is to be mentioned that the terminology used herein, either to describe the invention, the claims or otherwise, is not to be understood as limited to its most common sense, but all terms must be construed as implying the broadest signification thereof.

It is to be understood that a specific combination herein does not exclude for the same purposes other combinations of the same elements resulting in similar results or parts thereof. In other words, it is implied that the elements referred to herein and the combinations thereof may be combined is as many ways as necessary to achieve similar results or parts thereof as the specifically described ones.

Other configurations of the control tower 1 are possible. For example, the disposition of the different components (first antenna 5, GPS antenna 6, pressure sensor 7, magnetometer 8, second antenna 9 and processing unit 14) can differs that the one shown in Fig. 2. The processing unit 14 can comprise any type of processing unit 14 configured for processing the ADS-B signal 20 emitted by the transponder 25 and received by the control tower 1, and generate the air traffic information signal 27.

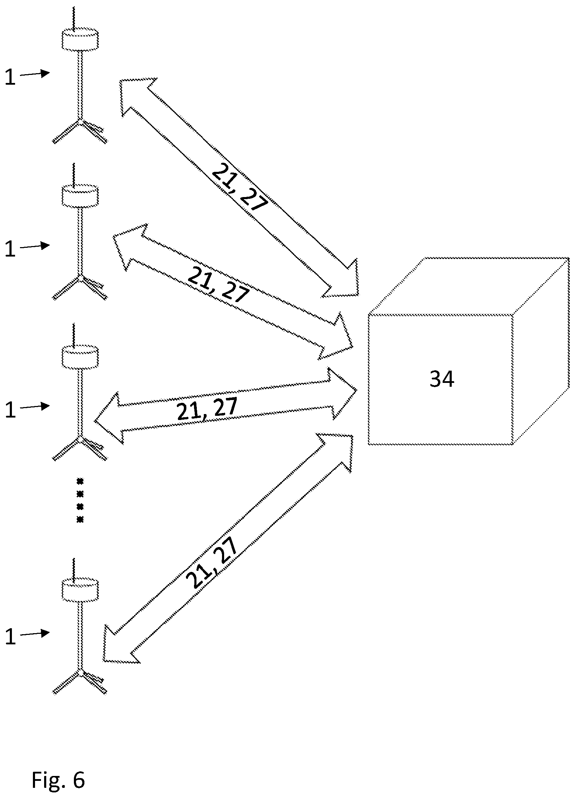

In an embodiment, the system further comprises an external computing unit 34 (see Fig. 6) configured for receiving data collected by the control tower 1 (transponder signal 19 and/or ADS-B signal), for running the computation algorithms (conversion code 35, ADS-B decoder code 29, traffic information code 30 and/or fencing calculation code 31), and for sending the air traffic information (air traffic information signal 27 and/or the fencing information signal 33) to the drone control system 24 and/or drone autopilot (UAV remote control 22).

In an embodiment shown in Fig. 6, the control system comprises a plurality of the control tower 1. Each control tower 1 can be inter-connected to at least one external processing unit 34. Since the control towers 1 can be distributed over a given geographic area, the control system according to this embodiment allows for extending the coverage range.

The control system can comprise positioning code (to be run on the external processing unit 34), such as but not limited to triangulation and/or multilateration), in order to calculate the position of detected aircraft via air traffic information.

Again, the external computing unit 34 can be configured for receiving data collected by the plurality of control towers 1, for running the computation algorithms, and for sending the air traffic information to the drone control system 24 and/or drone autopilot 22. The external computing unit 34 can further be configured for sending the air traffic information to a plurality of drone control systems 24 and/or drone autopilots 22

The plurality of control towers 1 can be installed and/or deployed on different (i) telecommunication antennas, including without limitation 4G antennas and/or television broadcast antennas and/or radio broadcast antennas, (ii) aviation infrastructure, (iii) electricity infrastructure, (iv) public utilities infrastructure, (v) railway infrastructure and/or (vi) other transportation infrastructure, (vii) real estate infrastructure and/or (viii) satellite infrastructure.

### Reference Numbers and Symbols

- 1: control tower
- 2: tripod
- 3: computer
- 4: top cover
- 5: first antenna
- 6: GPS antenna
- 7: pressure sensor
- 8: magnetometer
- 9: second antenna
- 10: motor
- 11: printed circuit board (PCB)
- 12: flex cable
- 13: connecting module
- 14: processing unit
- 15: battery
- 16: bottom cover
- 17: air vehicle equipped with
- 18: air vehicle equipped with ADS-B
- 19: transponder signal
- 20: ADS-B signal
- 21: communication link
- 22: drone remote control
- 23: drone
- 24: drone control system
- 25: transponder
- 26: directional message
- 27: air traffic information signal
- 28: ADS-B
- 29: ADS-B decoder code
- 30: traffic information code
- 31: fencing calculation code
- 32: collision assessment code
- 33: fencing information signal
- 34: external processing unit
- 35: conversion code
- α: angle
- β: angle

## Claims

1. A portable air-traffic control system for detecting one or a plurality of transponder air vehicles (17) emitting a transponder signal (19) and ADS-B air vehicles (18) emitting an ADS-B signal (20), and for avoiding collision between the detected air vehicles (17, 18) and unmanned aerial vehicles (UAV) (23); the control system comprising a plurality of portable control towers (1) and an external computing unit (34), wherein each portable control tower includes:
a first antenna (5) configured for receiving the transponder signal (19) and the emitted ADS-B signal (20);
a second antenna (9) configured for transmitting the transponder signal (19) to the transponder air vehicles (17);
a processing unit (14), configured to process the received ADS-B signal (20) and/or the received transponder signal (19);
wherein each control tower (1) is interconnected to the external computing unit (34) such that the external computing unit (34) is configured to receive the transponder signal (19) and the ADS-B signal (20) from each of said plurality of portable control towers (1);
wherein the external computing unit (34) is further configured for running a conversion code (35) to convert the received transponder signal (19) to GPS coordinates, and an ADS-B decoder code (29) for decoding the ADS-B signal (20), in order to determine positions of the detected transponder air vehicles (17) and ADS-B air vehicles (18), respectively;
wherein the external computing unit (34) is further configured for running a traffic information code (30) to calculate a speed and direction for the detected transponder air vehicles (17) and ADS-B air vehicles (18), from the determined positions;
wherein the external computing unit (34) is further configured for running a fencing calculation code (31) to calculate a fencing area around the transponder air vehicles (17) and ADS-B air vehicles (18) using the speed and the direction of the air vehicles, and provide the corresponding fencing signal (33); and
wherein the external computing unit (34) is further configured to send the fencing information signal (33) to the external control device (22, 24).

2. The control system according to claim 1,
wherein said external control device comprises a computing device (3) of a UAV remote control (22) comprising a display; and
wherein said fencing information signal (33) is configured to be used in combination with the computing device (3) to display air-traffic information on the display.

3. The control system according to claim 1 or 2,
wherein said external control device comprises a UAV control system (24) and
wherein said fencing information signal (33) is configured to be used in combination with the UAV control system (24) to pilot the UAV (23) in an autonomous way such as to avoid the collision with the air vehicles (17, 18).

4. The control system according to any one of claims 1 to 3, wherein the first antenna (5) comprises a 1090 MHz directional and/or omnidirectional antenna.

5. The control system according to any one of claims 1 to 4, wherein the control tower (1) further comprises a pressure sensor (7) configured for measuring a second altitude reading of the control tower (1).

6. The control system according to any one of claims 1 to 5, wherein the control tower (1) further comprises a GPS antenna (6) configured for measuring a GPS position of the control tower (1).

7. The control system according to any one of claims 1 to 6, further comprising a magnetometer (8) configured for measuring the magnetic North of the control tower (1).

8. The control system according to any one of claims 1 to 7, wherein the control towers (1) are distributed over a given geographic area

9. The control system according to any one of claims 1 to 8, wherein the external computing unit (34) is configured for sending the air traffic information to a plurality of the external control device (22, 24).

10. The control system according to any one of claims 1 to 9, wherein the external computing unit (34) is configured for running a positioning code to calculate the position of detected air vehicles (17, 18).

11. The control system according to any one of claims 1 to 10, wherein said plurality of control towers (1) are deployed on infrastructure elements comprising at least one of: telecommunication antennas, aviation infrastructure, electricity infrastructure, public utilities infrastructure, transportation infrastructure, real estate infrastructure, or satellite infrastructure.

12. A method for generating a fencing information signal (33) using the control system according to any one of claims 1 to 11, comprising:
using the first antenna (5) to receive the ADS-B signal and/or the transponder signal; and
using the processing unit (14) to process the received ADS-B signal and/or the received transponder signal;
using the external computing unit (34) to calculate a speed and direction for the detected transponder air vehicles (17) and ADS-B air vehicles (18), from the determined positions; and
calculate the fencing area around the transponder air vehicles (17) and ADS-B air vehicles (18), provide the corresponding fencing signal (33) and send the fencing information signal (33) to the external control device (22, 24).

13. The method according to claim 12,
wherein the portable control tower (1) further comprises a GPS antenna (6), a pressure sensor (7) and a magnetometer (8); and
wherein said processing the received transponder signal comprises:
determining a control angle (α) between the North of the control tower (1) and the magnetic North by using the magnetometer (8);
determining an antenna angle (α+β) between the second antenna (9) when pointed towards the direction of a detected air vehicle and the magnetic North;
determining a control position and a first altitude value of the control tower (1) by using the GPS antenna (6);
determining a distance between the control tower (1) and the detected air vehicle;
determining a GPS altitude of the detected air vehicle by using the pressure sensor (7); and
calculating a GPS position of the detected air vehicle from the determined control angle (α), antenna angle (α+β), control position, first altitude value, distance and GPS altitude.

14. A non-transitory computer medium comprising portions of code for a software application destined to be executed in the processing unit (14) and in the external computing unit (34) in order to perform the method according to claim 12 or 13.

## Patentansprüche

1. Tragbares Flugverkehrskontrollsystem zum Erfassen eines oder einer Vielzahl von Transponder-Luftfahrzeugen (17), welche ein Transpondersignal (19) aussenden, und von ADS-B-Luftfahrzeugen (18), welche ein ADS-B-Signal (20) aussenden, und zum Vermeiden einer Kollision zwischen den erfassten Luftfahrzeugen (17, 18) und unbemannten Luftfahrzeugen (UAV) (23); wobei das Kontrollsystem eine Vielzahl von tragbaren Kontrolltürmen (1) umfasst und eine externe Recheneinheit (34), worin jeder tragbare Kontrollturm Folgendes umfasst:
eine erste Antenne (5), welche dazu konfiguriert ist, das Transpondersignal (19) und das ausgesendete ADS-B-Signal (20) zu empfangen;
eine zweite Antenne (9), welche dazu konfiguriert ist, das Transpondersignal (19) an die Transponder-Luftfahrzeuge (17) zu übertragen;
eine Verarbeitungseinheit (14), welche dazu konfiguriert ist, das empfangene ADS-B-Signal (20) und/oder das empfangene Transpondersignal (19) zu verarbeiten;
worin jeder Kontrollturm (1) mit der externen Recheneinheit (34) derart zusammengeschaltet ist, dass die externe Recheneinheit (34) dazu konfiguriert ist, das Transpondersignal (19) und das ADS-B-Signal (20) von jedem der besagten Vielzahl von tragbaren Kontrolltürmen (1) zu empfangen;
worin die externe Recheneinheit (34) ferner dazu konfiguriert ist, einen Umwandlungscode (35) auszuführen, um das empfangene Transpondersignal (19) in GPS-Koordinaten umzuwandeln, sowie einen ADS-B-Decoder-Code (29) zum Decodieren des ADS-B-Signals (20), um Positionen der erfassten Transponder-Luftfahrzeuge (17) bzw. ADS-B-Luftfahrzeuge (18) zu bestimmen;
worin die externe Recheneinheit (34) ferner dazu konfiguriert ist, einen Verkehrsinformationscode (30) auszuführen, um aus den bestimmten Positionen eine Geschwindigkeit und Richtung für die erfassten Transponder-Luftfahrzeuge (17) und ADS-B-Luftfahrzeuge (18) zu berechnen;
worin die externe Recheneinheit (34) ferner dazu konfiguriert ist, einen Einzäunungsberechnungscode (31) auszuführen, um unter Verwendung der Geschwindigkeit und Richtung der Luftfahrzeuge einen Einzäunungsbereich um die Transponder-Luftfahrzeuge (17) und ADS-B-Luftfahrzeuge (18) zu berechnen, und das entsprechende Einzäunungssignal (33) bereitzustellen; und
worin die externe Recheneinheit (34) ferner dazu konfiguriert ist, das Einzäunungsinformationssignal (33) an die externe Steuervorrichtung (22, 24) zu senden.

2. Kontrollsystem gemäss Anspruch 1,
worin die besagte externe Steuervorrichtung eine Rechenvorrichtung (3) einer UAV-Fernsteuerung (22) umfasst, welche eine Anzeige umfasst; und
worin das besagte Einzäunungsinformationssignal (33) dazu konfiguriert ist, um in Kombination mit der Rechenvorrichtung (3) verwendet zu werden, um Flugverkehrsinformationen auf der Anzeige anzuzeigen.

3. Kontrollsystem gemäss Anspruch 1 oder 2,
worin die besagte externe Steuervorrichtung ein UAV-Steuerungssystem (24) umfasst und
worin das besagte Einzäunungsinformationssignal (33) dazu konfiguriert ist, um in Kombination mit dem UAV-Steuerungssystem (24) verwendet zu werden, um das UAV (23) auf autonome Weise so zu steuern, dass die Kollision mit den Luftfahrzeugen (17, 18) vermieden wird.

4. Kontrollsystem gemäss irgendeinem der Ansprüche 1 bis 3, worin die erste Antenne (5) eine Richt- und/oder Rundstrahlantenne für 1090 MHz umfasst.

5. Kontrollsystem gemäss irgendeinem der Ansprüche 1 bis 4, worin der Kontrollturm (1) ferner einen Drucksensor (7) umfasst, welcher zum Messen eines zweiten Höhenmesswerts des Kontrollturms (1) konfiguriert ist.

6. Kontrollsystem gemäss irgendeinem der Ansprüche 1 bis 5, worin der Kontrollturm (1) ferner eine GPS-Antenne (6) umfasst, welche zum Messen einer GPS-Position des Kontrollturms (1) konfiguriert ist.

7. Kontrollsystem gemäss irgendeinem der Ansprüche 1 bis 6, ferner umfassend ein Magnetometer (8), welches zum Messen des magnetischen Nordens des Kontrollturms (1) konfiguriert ist.

8. Kontrollsystem gemäss irgendeinem der Ansprüche 1 bis 7, worin die Kontrolltürme (1) über ein bestimmtes geografisches Gebiet verteilt sind.

9. Kontrollsystem gemäss einem der Ansprüche 1 bis 8, worin die externe Recheneinheit (34) dazu konfiguriert ist, die Flugverkehrsinformationen an eine Vielzahl der externen Steuervorrichtungen (22, 24) zu senden.

10. Kontrollsystem gemäss irgendeinem der Ansprüche 1 bis 9, worin die externe Recheneinheit (34) dazu konfiguriert ist, einen Positionierungscode auszuführen, um die Position von erfassten Luftfahrzeugen (17, 18) zu berechnen.

11. Kontrollsystem gemäss irgendeinem der Ansprüche 1 bis 10, worin die besagte Vielzahl von Kontrolltürmen (1) auf Infrastrukturelementen eingesetzt wird, welche mindestens eines von Folgendem umfassen: Telekommunikationsantennen, Luftfahrtinfrastruktur, Elektrizitätsinfrastruktur, Versorgungsinfrastruktur, Transportinfrastruktur, Immobilieninfrastruktur oder Satelliteninfrastruktur.

12. Verfahren zum Erzeugen eines Einzäunungsinformationssignals (33) unter Verwendung des Kontrollsystems gemäss irgendeinem der Ansprüche 1 bis 11, umfassend:
Verwenden der ersten Antenne (5) zum Empfangen des ADS-B-Signals und/oder des Transpondersignals; und
Verwenden der Verarbeitungseinheit (14) zum Verarbeiten des empfangenen ADS-B-Signals und/oder des empfangenen Transpondersignals,
Verwenden der externen Recheneinheit (34) zum Berechnen einer Geschwindigkeit und Richtung für die erfassten Transponder-Luftfahrzeuge (17) und ADS-B-Luftfahrzeuge (18) aus den bestimmten Positionen; und
Berechnen des Einzäunungsbereichs um die Transponder-Luftfahrzeuge (17) und ADS-B-Luftfahrzeuge (18), Bereitstellen des entsprechenden Einzäunungssignals (33) und Senden des Einzäunungsinformationssignals (33) an die externe Steuervorrichtung (22, 24).

13. Verfahren gemäss Anspruch 12,
worin der tragbare Kontrollturm (1) ferner eine GPS-Antenne (6), einen Drucksensor (7) und ein Magnetometer (8) umfasst; und
worin das besagte Verarbeiten des empfangenen Transpondersignals Folgendes umfasst:
Bestimmen eines Kontrollwinkels (α) zwischen dem Norden des Kontrollturms (1) und dem magnetischen Norden unter Verwendung des Magnetometers (8);
Bestimmen eines Antennenwinkels (α+β) zwischen der Transponderantenne (9), wenn sie in Richtung eines erfassten Luftfahrzeugs gerichtet ist, und dem magnetischen Norden;
Bestimmen einer Kontrollposition und eines ersten Höhenwerts des Kontrollturms (1) unter Verwendung der GPS-Antenne (6);
Bestimmen eines Abstands zwischen dem Kontrollturm (1) und dem erfassten Luftfahrzeug;
Bestimmen einer GPS-Höhe des erfassten Luftfahrzeugs unter Verwendung des Drucksensors (7); und
Berechnen einer GPS-Position des erfassten Luftfahrzeugs aus dem bestimmten Kontrollwinkel (α), Antennenwinkel (α+β), der Kontrollposition, dem ersten Höhenwert, dem Abstand und der GPS-Höhe.

14. Nichtflüchtiges Computermedium, welches Codeabschnitte für eine Softwareanwendung umfasst, die dazu bestimmt ist, in der Verarbeitungseinheit (14) und in der externen Recheneinheit (34) ausgeführt zu werden, um das Verfahren gemäss Anspruch 12 oder 13 durchzuführen.

## Revendications

1. Un système portable de contrôle du trafic aérien pour détecter un ou une pluralité de véhicules aériens à transpondeur (17) émettant un signal de transpondeur (19) et des véhicules aériens ADS-B (18) émettant un signal ADS-B (20), et pour éviter une collision entre les véhicules aériens détectés (17, 18) et les véhicules aériens sans pilote (UAV) (23) ; le système de contrôle comprenant une pluralité de tours de contrôle portables (1) et une unité informatique externe (34), chaque tour de contrôle portable comprenant:
une première antenne (5) configurée pour recevoir le signal de transpondeur (19) et le signal ADS-B émis (20) ;
une deuxième antenne (9) configurée pour transmettre le signal de transpondeur (19) aux véhicules aériens à transpondeur (17) ;
une unité de traitement (14) configurée pour traiter le signal ADS-B reçu (20) et/ou le signal de transpondeur reçu (19) ;
chaque tour de contrôle portable (1) étant interconnectée à l'unité informatique externe (34) de sorte que l'unité informatique externe (34) soit configurée pour recevoir le signal de transpondeur (19) et le signal ADS-B (20) de chacune de ladite pluralité de tours de contrôle portables (1) ;
l'unité informatique externe (34) étant en outre configurée pour exécuter un code de conversion (35) afin de convertir le signal de transpondeur reçu (19) en coordonnées GPS, et un code de décodeur ADS-B (29) pour décoder le signal ADS-B (20), afin de déterminer les positions des véhicules aériens à transpondeur détectés (17) et des véhicules aériens ADS-B détectés (18), respectivement ;
l'unité informatique externe (34) étant en outre configurée pour exécuter un code d'information de trafic (30) afin de calculer une vitesse et une direction pour les véhicules aériens à transpondeur détectés (17) et les véhicules aériens ADS-B détectés (18), à partir des positions déterminées ;
l'unité informatique externe (34) étant en outre configurée pour exécuter un code de calcul d'exclusion (31) afin de calculer une zone d'exclusion autour des véhicules aériens à transpondeur (17) et des véhicules aériens ADS-B (18) en utilisant la vitesse et la direction des véhicules aériens, et fournir le signal d'exclusion correspondant (33) ; et
l'unité informatique externe (34) étant en outre configurée pour envoyer le signal d'exclusion (33) au dispositif de contrôle externe (22, 24).

2. Le système de contrôle selon la revendication 1,
ledit dispositif de contrôle externe comprenant un dispositif informatique (3) d'une télécommande UAV (22) comprenant un affichage ; et
ledit signal d'exclusion (33) étant configuré pour être utilisé en combinaison avec le dispositif informatique (3) afin d'afficher des informations de trafic aérien sur l'affichage.

3. Le système de contrôle selon la revendication 1 ou 2,
ledit dispositif de contrôle externe comprenant un système de contrôle UAV (24); et
ledit signal d'exclusion (33) étant configuré pour être utilisé en combinaison avec le système de contrôle UAV (24) afin de piloter l'UAV (23) de manière autonome de façon à éviter la collision avec les véhicules aériens (17, 18).

4. Le système de contrôle selon l'une quelconque des revendications 1 à 3,
la première antenne (5) comprenant une antenne directionnelle et/ou omnidirectionnelle de 1090 MHz.

5. Le système de contrôle selon l'une quelconque des revendications 1 à 4,
la tour de contrôle portable (1) comprenant en outre un capteur de pression (7) configuré pour mesurer une deuxième lecture d'altitude de la tour de contrôle portable (1).

6. Le système de contrôle selon l'une quelconque des revendications 1 à 5,
la tour de contrôle portable (1) comprenant en outre une antenne GPS (6) configurée pour mesurer une position GPS de la tour de contrôle portable (1).

7. Le système de contrôle selon l'une quelconque des revendications 1 à 6,
comprenant en outre un magnétomètre (8) configuré pour mesurer le Nord magnétique de la tour de contrôle portable (1).

8. Le système de contrôle selon l'une quelconque des revendications 1 à 7,
les tours de contrôle portables (1) étant distribuées sur une zone géographique donnée.

9. Le système de contrôle selon l'une quelconque des revendications 1 à 8,
l'unité informatique externe (34) étant configurée pour envoyer les informations de trafic aérien à une pluralité de dispositifs de contrôle externe (22, 24).

10. Le système de contrôle selon l'une quelconque des revendications 1 à 9,
l'unité informatique externe (34) étant configurée pour exécuter un code de positionnement afin de calculer la position des véhicules aériens détectés (17, 18).

11. Le système de contrôle selon l'une quelconque des revendications 1 à 10,
ladite pluralité de tours de contrôle portables (1) étant déployée sur des éléments d'infrastructure comprenant au moins l'un des éléments suivants : antennes de télécommunication, infrastructure aéronautique, infrastructure électrique, infrastructure de services publics, infrastructure de transport, infrastructure immobilière ou infrastructure satellite.

12. Un procédé de génération d'un signal d'exclusion (33) utilisant le système de contrôle selon l'une quelconque des revendications 1 à 11, comprenant:
utiliser la première antenne (5) pour recevoir le signal ADS-B et/ou le signal de transpondeur ; et
utiliser l'unité de traitement (14) pour traiter le signal ADS-B reçu et/ou le signal de transpondeur reçu ;
utiliser l'unité informatique externe (34) pour calculer une vitesse et une direction pour les véhicules aériens à transpondeur détectés (17) et les véhicules aériens ADS-B détectés (18), à partir des positions déterminées ; et
calculer la zone d'exclusion autour des véhicules aériens à transpondeur (17) et des véhicules aériens ADS-B (18), fournir le signal d'exclusion correspondant (33) et envoyer le signal d'exclusion (33) au dispositif de contrôle externe (22, 24).

13. Le procédé selon la revendication 12,
la tour de contrôle portable (1) comprenant en outre une antenne GPS (6), un capteur de pression (7) et un magnétomètre (8) ; et
ledit traitement du signal de transpondeur reçu comprend :
déterminer un angle de contrôle (α) entre le Nord de la tour de contrôle portable (1) et le Nord magnétique en utilisant le magnétomètre (8) ;
déterminer un angle d'antenne (α+β) entre la deuxième antenne (9) pointée vers la direction d'un véhicule aérien détecté et le Nord magnétique ;
déterminer une position de contrôle et une première valeur d'altitude de la tour de contrôle portable (1) en utilisant l'antenne GPS (6) ;
déterminer la distance entre la tour de contrôle portable (1) et le véhicule aérien détecté ;
déterminer l'altitude GPS du véhicule aérien détecté en utilisant le capteur de pression (7) ; et
calculer une position GPS du véhicule aérien détecté à partir de l'angle de contrôle déterminé (α), de l'angle d'antenne (α+β), de la position de contrôle, de la première valeur d'altitude, de la distance et de l'altitude GPS.

14. Un support informatique non transitoire comprenant des portions de code pour une application logicielle destinée à être exécutée dans l'unité de traitement (14) et dans l'unité informatique externe (34) afin d'exécuter le procédé selon la revendication 12 ou 13.
